Europäisches Patentamt

European Patent Office

Office européen des brevets

(11) Veröffentlichungsnummer: **0 239 965 B1**

(19)

(12) **EUROPÄISCHE PATENTSCHRIFT**

(45) Veröffentlichungstag der Patentschrift: **20.05.92**

(21) Anmeldenummer: **87104639.7**

(22) Anmeldetag: **28.03.87**

(51) Int. Cl.⁵: **H02H 3/38,** H02H 7/26

(54) Verfahren und Vorrichtung für die Anregung eines mehrphasigen Distanzschutzes.

(30) Priorität: **03.04.86 DE 3611083**

(43) Veröffentlichungstag der Anmeldung:
**07.10.87 Patentblatt 87/41**

(45) Bekanntmachung des Hinweises auf die
Patenterteilung:
**20.05.92 Patentblatt 92/21**

(84) Benannte Vertragsstaaten:
**CH DE GB IT LI SE**

(56) Entgegenhaltungen:
**DE-A- 2 264 064**
**DE-B- 2 701 989**
**GB-A- 2 050 093**
**US-A- 4 329 727**

**BULLETIN ASE/UCS, Band 72, Nr. 9, 9. Mai
1981, Seiten 450-452; P. BULATY:
"Netzimpedanzmessung für Schutzzwecke"**

**BROWN BOVERI REVIEW, Band 70, Nr. 9/10,
September/Okfober 1983; I. DE MESMAEKER
et al; Seiten 379-383**

(73) Patentinhaber: **Licentia Patent-
Verwaltungs-GmbH
Theodor-Stern-Kai 1
W-6000 Frankfurt/Main 70(DE)**

(72) Erfinder: **Rijanto, Hendro, Dr.
Gründenseestrasse 35
W-6000 Frankfurt/Main 61(DE)**
Erfinder: **Dittrich, Hans-Jürgen
Hainerweg 104
W-6000 Frankfurt/Main 70(DE)**

(74) Vertreter: **Lertes, Kurt, Dr.
Licentia Patent-Verwaltungs-GmbH Theodor-
Stern-Kai 1
W-6000 Frankfurt/M 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren und eine Vorrichtung für die Anregung eines mehrphasigen Distanzschutzes mit digitaler Verarbeitung der gemessenen Ströme und Spannungen.

Es ist bereits eine Anregeschaltung für eine mehrphasige Netzschutzeinrichtung bekannt, die bei einfachem Aufbau eine hohe Selektivität hat (DE-C-27 01 989). Die bekannte Anregeschaltung hat eine unstetige Kennlinie. In jeder Phase sind drei unterschiedliche, alternativ wirkende überstromstufen vorhanden, die logische Schaltglieder beaufschlagen. Der ersten, die Fusspunktanregung festlegenden überstromstufe ist eine Unterspannungsanregung zugeordnet. Das Ausgangssignal der zweiten überstromstufe ist mit einem Diskriminatorsignal verknüpft, das überlastbetrieb im fehlerfreien Netz vom Fehlerfall unterscheidet. Die dritte überstromstufe mit dem höchsten Ansprechwert liefert unmittelbar ein Anregesignal für die betreffende Phase bei überschreiten des Ansprechwerts. Das Diskriminatorsignal wird durch eine überwachungsschaltung gebildet, die auf eine Spannungsabsenkung in der zugeordneten Phase anspricht.

Bekannt ist auch eine Distanzschutzeinrichtung mit einer an Strom- und Spannungswandler der zu schützenden Netzstrecke angeschlossenen Auswahlschaltung, die einen Strom- und einen Spannungsausgang besitzt.

Der Stromausgang ist einerseits unmittelbar und andererseits über ein Differenzglied an einen Analog-Digital-Umsetzer angeschlossen. Der Spannungsausgang ist unmittelbar mit dem Analog-Digital-Umsetzer verbunden, dem ein Rechner nachgeschaltet ist. Der Rechner und der Analog-Digital-Umsetzer werden taktweise gesteuert. Der Rechner ermittelt die Leitungsimpedanz, die mit einem eingestellten Grenzwert verglichen wird. Die Impedanzberechnung wird durch eine auf eine bestimmte Stromsteilheit ansprechende Starterstufe eingeleitet (DE-A-22 64 064).

Der Erfindung liegt die Aufgabe zugrunde, ein Verfahren und eine Vorrichtung für einen mehrphasigen Distanzschutz mit digitaler Verarbeitung der gemessenen Ströme und Spannungen zu entwickeln, die bei hoher Selektivität die Erkennung von Fehlern im Messkreis ermöglichen.

Die Aufgabe wird für das Verfahren erfindungsgemäss durch die im Anspruch 1 beschriebenen Massnahmen gelöst. Durch die Erkennung von Fehlern im Messkreis wird die Zuverlässigkeit der Überwachung erhöht. Weiterhin werden unnötige Eingriffe in den Netzbetrieb für den Fall vermieden, dass Fehler im Messkreis vorhanden sind. Für die Vorrichtung wird die Aufgabe erfindungsgemäss durch die Merkmale des Anspruchs 11 gelöst.

Bei einer bevorzugten Ausführungsform werden die Amplituden der Leitererdspannungen und der Leiterleiterspannungen durch numerische Mittelwertbildung über ein Datenfenster von einigen Abtastwerten bestimmt.

Die Amplituden der zu überwachenden Messgrössen lassen sich mit dem vorstehend beschriebenen Verfahren in einer sehr kurzen Zeit bestimmen. Transiente Störungen und Oberschwingungen haben dabei keinen wesentlichen Einfluss auf das Ergebnis. Zweckmässigerweise werden die Amplituden der Ströme und Spannungen als Messwerte angezeigt. Nach Erzeugung eines AUS-Kommandos für die Leistungsschalter können aus den gespeicherten Abtastwerten die Kurzschlussströme und Kurzschlussspannungen durch Mittelwertbildung berechnet werden.

Vorzugsweise werden die Beträge der aktuellen Abtastwerte von den Beträgen der um eine Periode der Netzfrequenz zurückliegenden Abtastwerte der Leitererdspannungen und der Leiterleiterspannungen sowie der zugehörigen Ströme subtrahiert, wobei die Differenzen integriert und mit vorgebbaren Grenzwerten für Spannungen und Ströme verglichen werden. Es handelt sich hierbei um einen Gleichrichtwert der Differenzspannung, der zweckmässigerweise durch Bezug auf die Nennspannung normiert wird. Durch die Integration werden Oberschwingungen unterdrückt. Die normierten Gleichrichtwerte stehen für den Vergleich mit den vorgegebenen Grenzwerten zur Verfügung. Es werden die Leitererd- und die Leiterleiterspannungen des Netzes mit dem Vorstehend beschriebenen Verfahren überwacht. Wenn Änderungen, die die vorgegebenen Grenzwerte überschreiten, festgestellt werden, dann wird geprüft, ob es sich um asymmetrische oder symmetrische Änderungen handelt. In Abhängigkeit von asymmetrischen oder symmetrischen Spannungsänderungen wird jeweils auf verschiedene Prüfmaßnahmen übergegangen. Bei asymmetrischen Spannungsänderungen werden die betroffenen Leiterschleifen auf Stromänderungen geprüft, die entweder negativ oder positiv sein können. Bei einer negativen Stromänderung, die über ein gewisses Maß hinausgeht, wird die von der Spannungsanderung ausgelöste Anregung zurückgenommen. Ist die Stromänderung größer als ein vorgebbares Maß, dann wird die Impedanz des Netzes geprüft. Liegt der Impedanzwert außerhalb einer polygonförmigen Ortskurve, wird die Anregung zurückgenommen. Im anderen Falle wird die Anregung gespeichert. Wenn keine Stromänderung oder nur eine sehr kleine Stromänderung auftritt, dann liegt ein Fehler im Meßkreis vor. Es wird dann eine entsprechende Meldung ausgegeben.

Wenn eine symmetrische Spannungsänderung festgestellt wird, wird anschließend geprüft, ob sich im gleichen Zeitintervall die drei Leiterströme um ein vorgebbares Maß geändert haben. Die Polarität der Stromänderung wird ebenfalls geprüft. Bei einer negativen Stromänderung wird die von der symmetrischen Spannungsänderung eingeleitete Anregung zurückgenommen. Bei einer positiven Stromänderung über einen vorgebbaren Wert hinaus wird die Leitungsimpedanz geprüft. Befindet sich die Leitungsimpedanz innerhalb der oben erwähnten polygonförmigen Ortskurve, dann bleibt die Anregung bestehen, da es sich um einen Fehler im Netz handelt. Liegt die Impedanz außerhalb der Ortskurve, so wird die Anregung zurückgenommen.

Geprüft wird ferner, ob sich die Leiterströme nicht oder nur unwesentlich geändert haben. Ist dies in Verbindung mit einer erheblichen symmetrischen Spannungsänderung der Fall, dann liegt ein Automatenfall im Spannungsmeßkreis vor, was eine entsprechende Meldung auslöst.

Neben der oben für die Verarbeitung festgestellter Spannungsänderungen notwendige Impedanzmessung wird vorzugsweise noch eine Unterimpedanzanregung vorgesehen. Diese Anregung wird erzeugt, wenn ein Fußpunktstrom, d.h. ein Strom einer vorgegebenen Größe überschritten wird und kein Automatenfall vorliegt sowie keine Anregung durch eine Spannungsänderung in Verbindung mit den oben erwähnten Kriterien vorliegt.

Zur Bestimmung von Reaktanz und Resistanz wird eine Leitungsdifferentialgleichung 1. Ordnung verwendet. Es reicht aus, wenn die Impedanz in Abhängigkeit von einer Nullsystemanregung für die drei Leiterschleifen bestimmt wird.

Durch eine Nullsystemanregung sollen einerseits Netzfehler mit Erdberührung und andererseits die Meßkreise überwacht werden. Wenn eine auf einen Erdstrom hinweisende Anregung ohne eine weitere Anregung auftritt, ist dies ein Anzeichen für einen Fehler im Strommeßkreis.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen

| Figur 1 | ein Übersichtsschaltbild einer Anordnung für die Anregung eines mehrphasigen Distanzschutzes, |
| Figur 2 | Prinzipschaltpläne zur Meßgrößenüberwachung, |
| Figur 3 | einen Funktionsplan für die Fehlerfeststellungsarten, |
| Figur 4 | einen Schaltplan für die Überstromanregung, |
| Figur 5 | einen Schaltplan für die Nullsystemanregung, |
| Figur 6 | einen Schaltplan für die Bestimmung einer Spannungsänderung, |
| Figur 7a-f | Zeitdiagramme der Vorgänge bei |
| | einer Spannungsänderung, die einen vorgebbaren Grenzwert überschreitet, |
| Figur 8 | einen Schaltplan für eine Fehlererfassung bei symmetrischen Spannungsänderungen, |
| Figur 9 | eine Ortskurve der Anregung in der R-X-Ebene im Form eines Polygons. |

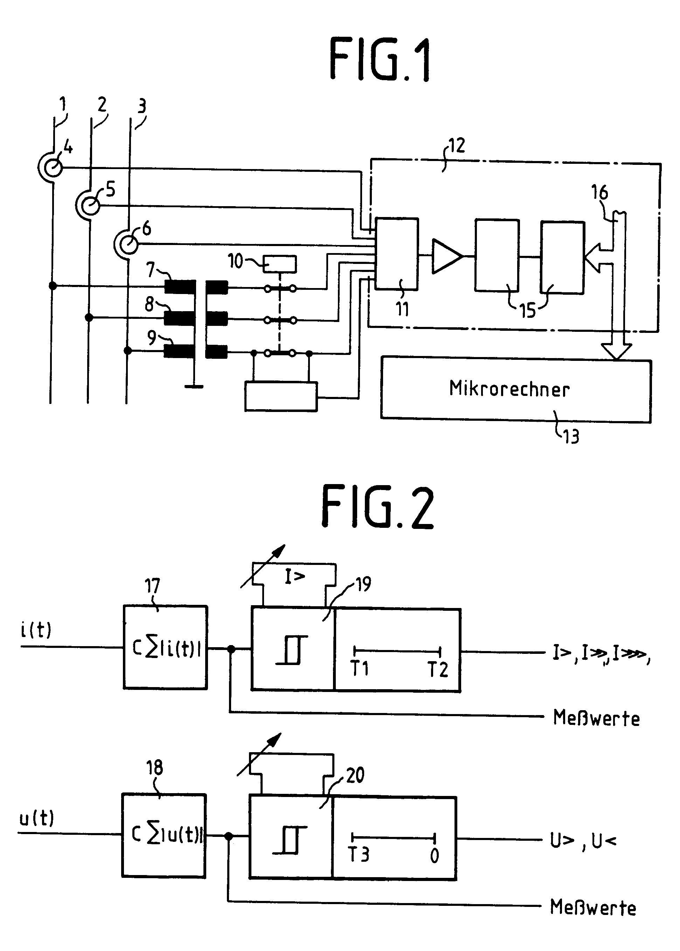

In der Schaltungsanordnung gemäß Figur 1 sind mit 1, 2, 3 die drei Phasenleiter eines Hochspannungsnetzes bezeichnet. Im Zuge der Leitungen sind jeweils Stromwandler 4, 5, 6 und Spannungswandler 7, 8, 9 angeordnet.

Die Sekundärseiten der Stromwandler 4, 5, 6 sind unmittelbar und die Sekundärseiten der Spannungswandler 7, 8, 9 über mechanisch gekoppelte Kontakte eines Spannungswandlerautomaten 10 mit Eingängen eines Multiplexers 11 in einer Datenerfassungseinheit 12 verbunden, die zu einem Mikrorecher 13 gehört. Der Ausgang des analogen Multiplexers 11 ist über einen nicht näher bezeichneten Verstärker mit einem A/D-Wandler verbunden, dem ein Speicher 15 nachgeschaltet ist, der mit einem Bus 16 in Verbindung steht. Die Datenerfassungseinheit 12 wird durch den Mikrorechner 13 gesteuert.

Die Ströme und Spannungen werden in äquidistanten Zeitintervallen abgetastet. Die digitalisierten Abtastwerte gelangen in den Datenspeicher 15 und werden von dort zur weiteren Verarbeitung vom Mikrorechner 13 ausgelesen.

Die Überwachungsaufgabe kann um so besser erfüllt werden, je schneller die Amplituden der überwachten Meßgrößen, der Ströme und Spannungen des Netzes, verfügbar sind. Zu berücksichtigen ist dabei noch, daß transiente Störungen und Oberschwingungen keinen wesentlichen Einfluß auf die festgestellten Amplituden haben sollen.

Die Amplituden der Spannungen und Ströme werden durch numerische Mittelwertbildung bestimmt. Die numerische Mittelwertbildung entspricht im Prinzip einer vereinfachten "Integration".

Die Figur 2 zeigt im Prinzipschaltbild die Meßgrößenüberwachung. Die digitalisierten Abtastwerte i (t) und u (t) des jeweiligen Datenfensters werden in ersten Verfahrensabschnitten 17, 18 betragsmäßig aufsummiert und mit einer Konstanten multipliziert. Die hierdurch ermittelte Amplitude des Strom I wird in weiteren Verfahrensschritten 19 mit verschiedenen, als Parameter vorgebbaren Stromwerten verglichen. Nach einer Verzögerungszeit zwischen T1 und T2 stehen dann Werte für den Fußpunktstrom I>, Überstrom I>> und Kurzschlußstrom I>>> zur Verfügung.

Die Amplitude der Spannung u (t) wird in weiteren Verfahrensschritten 20 mit zwei Grenzwerten der Spannung verglichen, durch die eine Überspannung U> und eine Unterspannung U< festgelegt ist. Das Ergebnis des Vergleichs steht nach der Verzögerungszeit T3 zur Verfügung. Nach der an Hand von Figur 2 erläuterten Methode werden vorzugsweise folgende Meßgrößen überwacht:

a) Nullsystemgrößen, die aus den Leiterströmen und Leitererdspannungen abgeleitet werden.

b) Alle Leiterströme auf Überschreiten eines vorgegebenen Fußpunktstroms I>, eines vorgegebenen Überstroms I>> oder eines vorgegebenen Kurzschlußstroms I>>>.

c) Alle Leitererdspannungen auf Über- und Unterspannung $U_E$>, $U_E$<.

d) Alle Leiterleiterspannungen auf Über- und Unterspannung $U_L$>, $U_L$<.

Die Spannungen U und Ströme I können zugleich zur Anzeige der Betriebsmeßwerte verwendet werden.

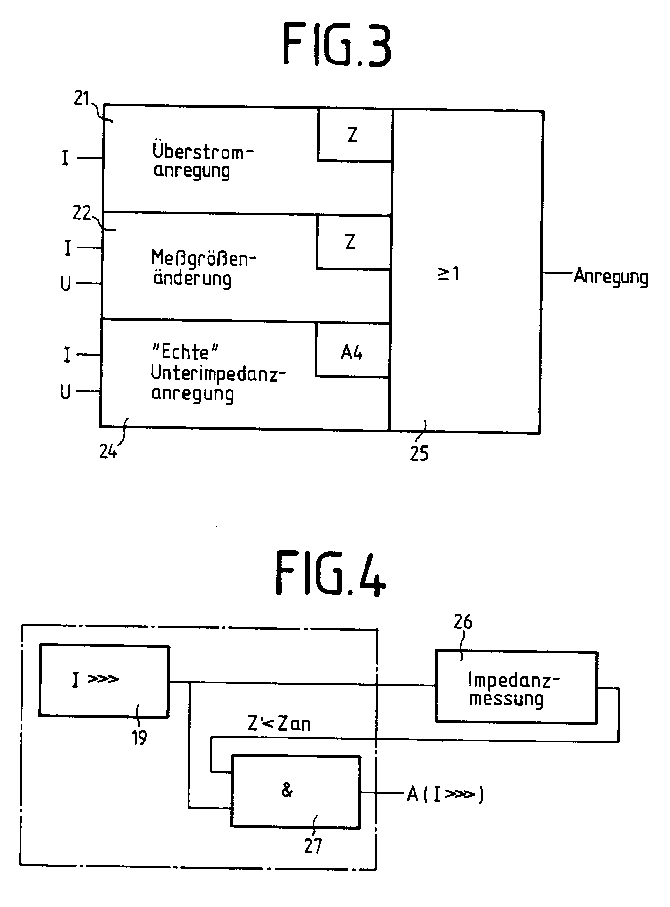

Die Figur 3 zeigt einen Funktionsplan für die Anregung. Die nachstehend angegebenen Fehler bewirken entsprechende Anregemaßnahmen:

1. Überstromanregung

Diese wird durch stromstarke Fehler ausgelöst und zugleich als überlagerter Schutz, z. B. bei Fehlern im Spannungswandlersekundärkreis, verwendet. Eingangsgröße für die in Figur 3 mit 21 bezeichnete Überstromanregung sind die Ströme I. Die Überstromanregung wird mit einer Impedanzmessung kombiniert. Diese ist in Figur 3 mit Z bezeichnet. Mit Hilfe der Impedanzmessung werden unerwünschte Funktionen, z. B. bei einem Einschaltrush, vermieden.

2. Überwachung von Strömen und Spannungen auf Änderungen über vorgebbare Grenzen hinaus. Fehler werden über die Auswertung positiver und negativer Spannungs- und Stromänderungen festgestellt. Meßgrößenänderungen sind in Figur 3 mit 22 bezeichnet. Auf die Feststellung entsprechender Meßgrößenänderungen folgt ebenfalls eine Impedanzmessung.

3. Eine echte, in Figur 3 mit 24 bezeichnete Unterimpedanzanregung dient zur Begrenzung der Reichweite von Schutzmaßnahmen.

Die drei oben beschriebenen Arten zur Fehlererkennung bewirken jeweils Anregungen, die in einem Verfahrensschritt 25 disjunktiv verknüpft werden.

Die bei der Feststellung eines Überstroms, z. B. eines Kurzschlußstroms I> > > ablaufenden Verfahrensschritte sind im einzelnen in Figur 4 dargestellt. Der oben bereits erwähnte Verfahrensschritt 19 meldet, einen Überstrom I> > >, der einen Impedanzmeßschritt 26 auslöst. Die Ausgangsgrößen I> > > und das Ergebnis des Impedanzmeßschritts 26 werden in einem Schritt 27 konjunktiv verknüpft. Falls die festgestellte Impedanz innerhalb eines weiter unten im einzelnen erläuterten "Anregungspolynoms" liegt, wird die Überstromanregung ausgegeben.

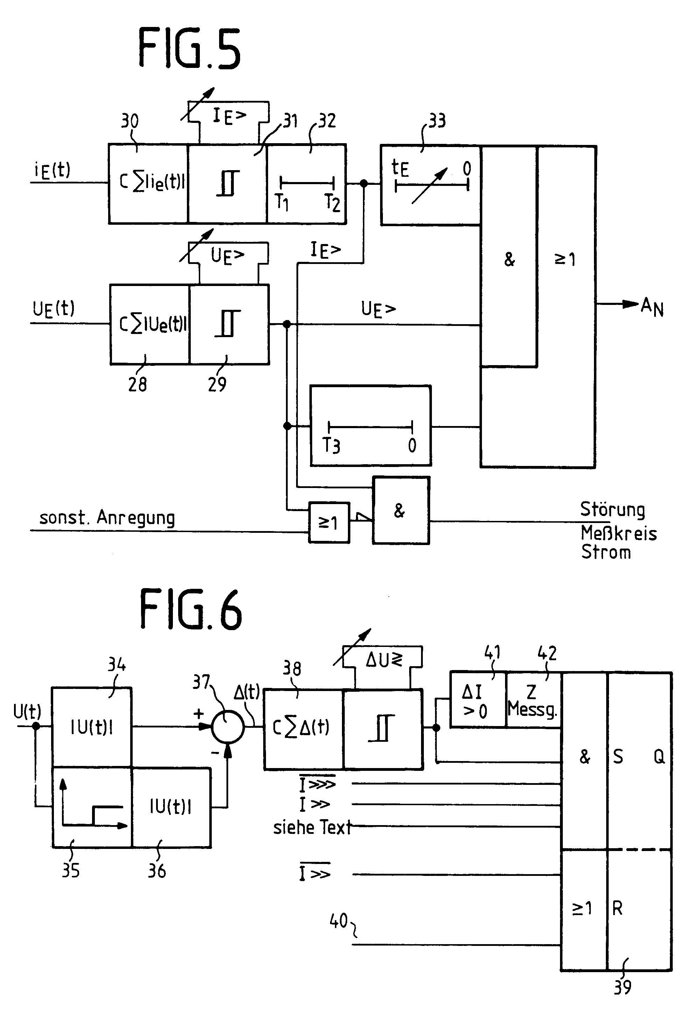

Zur Erkennung stromstarker Nahfehler ist neben der Überstromanregung noch die Nullsystemanregung vorgesehen, deren Schaltplan in Figur 5 dargestellt ist. Die Spannung zwischen Sternpunkt und Erde wird während einer halben Periode mit der oben erwähnten Frequenz abgetastet. In Figur 5 sind die digitalisierten Abtastwerte dieser Spannung mit $U_E$ (t) bezeichnet. Aus den Abtastwerten wird durch Mittelwertbildung in Verfahrensschritten 28 die Amplitude gebildet und in einem weiteren Verfahrensschritt 29 mit einer Spannungsschwelle $U_E$> verglichen, die als Parameter einstellbar ist. Die Amplitude des Nullsystemstroms wird aus Abtastwerten $i_E$ (t) in einem Verfahrensschritt 30 bestimmt. Die digitalisierten Abtastwerte $i_E$ (t) werden auf eine Weise gewonnen, die oben in Verbindung mit dem in Figur 2 dargestellten Verfahren bereits angegeben wurde. Um die Amplitude des Nullsystemstroms zu bestimmer, werden die in einem Datenfenster gewonnenen Abtastwerte mit einer Konstanten C multipliziert. Die Stromamplitude wird mit einer Stromschwelle $I_E$> in einem Verfahrensschritt 31 verglichen. An den Verfahrensschritt 31 schließt sich ein Zeitverzögerungsabschnitt 32 an. Der Zeitverzögerungsabschnitt 32 kann $T_1$ bis $T_2$ dauern. Über einen weiteren Zeitverzögerungsabschnitt 33, dessen Dauer als Parameter vorgebbar ist, wird bei Überschreiten des Grenzwertes ein entsprechender Wert mit dem die Überschreitung der Spannungsschwelle $U_E$> anzeigenden Wert konjunktiv verknüpft. Bei positivem Verknüpfungsergebnis wird in ODER-Verknüpfung mit einem weiteren Wert eine Nullsystemanregung $A_N$ erzeugt. Bei diesem weiteren Wert handelt es sich um den zwischen $T_3$ und 0 zeitverzögerten Wert, der im Verfahrensschritt 29 bestimmt wurde.

Eine Störungsmeldung für den Strommeßkreis wird durch konjunktive Verknüpfung des nach dem Zeitverzögerungsabschnitt 32 vorhandenen Stromwerts mit einem Wert erzeugt, der aus einer sonstigen Störmeldung in disjunktiver Verknüpfung mit dem im Verfahrensabschnitt 29 erhaltenen Wert gewonnen wird.

Meßgrößenänderungen werden durch einen Vergleich der aktuellen Abtastwerte mit den um eine vorgegebene Dauer zurückliegenden Momentanwerten erfaßt. Ist die Meßgröße eine Spannung, dann wird aus dem aktuellen Abtastwert u (t) durch Vergleich mit dem zurückliegenden Momentanwert der Spannung eine Hilfsgröße Δ u (t) nach folgender Beziehung gebildet:

$$\Delta u\,(t)\ =\ \left|u\,(t)\right| - \left|u\,(t - \tau)\right|$$

Dieses entspricht einer Gleichrichtung der bei einem Fehler auftretenden Differenzspannung. Den Betrag der Meßgrößenänderung DELTA erhält man durch eine Mittelwertbildung.

DELTA entspricht dem auf Un normierten Gleichrichtwert der Differenzspannung, wobei durch die Mittelwertbildung die durch die Gleichrichtung entstehenden Oberschwingungen unterdrückt werden. Mit dem oben beschriebenen Verfahren können die Leitererd- und die Leiterleiterspannungen auf Spannungsänderungen überwacht werden.

Die einzelnen Schritte zur Bestimmung der Meßgrößenänderung DELTA sind in Figur 6 im einzelnen dargestellt. Aus den aktuellen Abtastwerten u (t) wird in einem ersten Verfahrensschritt 34 der Betrag u (t) gebildet. Die Abtastwerte werden zugleich in einem Verfahrensschritt 35 gespeichert. Aus den um eine Periode zurückliegenden Momentanwerten werden in einem Schritt 36 nach dem Auslesen aus dem Speicher die Beträge gebildet. Der jeweilige Betrag wird von dem Betrag des entsprechenden aktuellen Abtastwerts in einem Verfahrensschritt 37 subtrahiert. Die Differenzen der Beträge werden in Verfahrensschritten 38 aufsummiert und mit einer Konstanten C multipliziert, die den konstanten Faktoren der oben angegebenen Gleichung entspricht. Hieraus ergibt sich die Spannungsänderung DELTA, die in einem nachfolgenden mit Spannungsgrenzwerten verglichen wird, von denen der eine einer oberen Grenze $\Delta$ U> und einer unteren Grenze $\Delta$ U< entspricht. Die Grenzen sind als Parameter vorgebbar. Falls die Grenzwerte jeweils über- oder unterschritten werden, wird der entsprechende Wert in einer weiter unten beschriebenen Weise weiterverarbeitet.

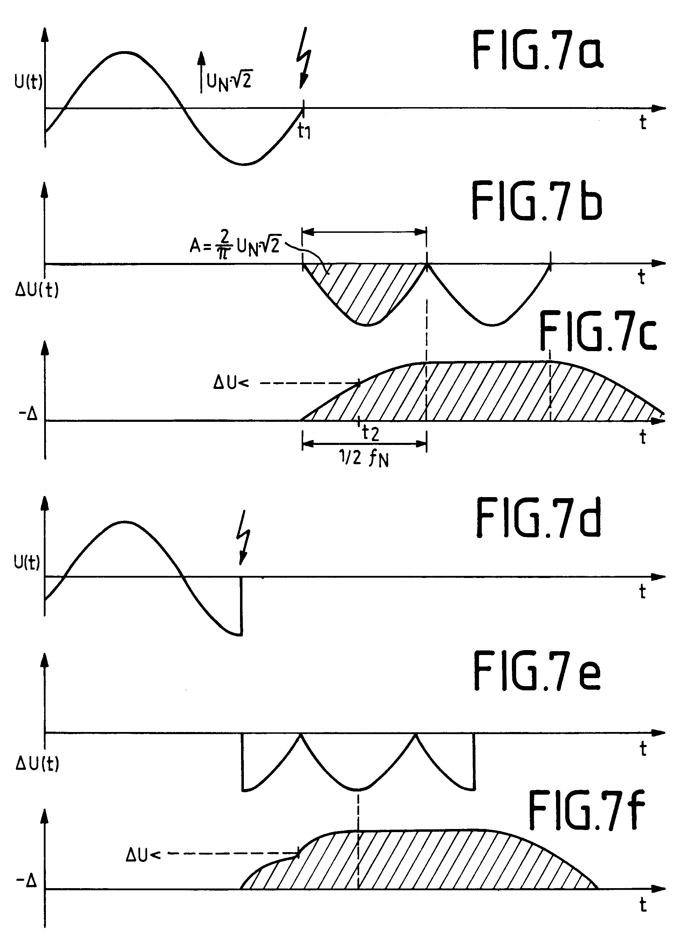

Die Figur 7a zeigt eine verkettete Spannung, die zum Zeitpunkt $t_1$ kurzgeschlossen wird. In Figur 7b ist die Spannung $\Delta$ u (t) dargestellt. Nach dem Kurzschluß ergeben sich in einer Periode die gleichgerichteten Werte der beiden vorausgehenden Halbperioden der Spannung. Aus diesen Werten wird DELTA berechnet, das in Figur 7c in Abhängigkeit von der Zeit dargestellt ist. In Figur 7c ist gestrichelt ein unterer Grenzwert $\Delta$ U< der Spannung eingestellt, der zu Zeitpunkt $t_2$ überschritten wird. Zum Zeitpunkt $t_2$ wird eine Bedingung für eine Anregung erzeugt. Diese tritt also vor Ablauf einer Periode

$$\frac{1}{2\ f_N}$$

auf.

Während gemäß Figur 7a ein Kurzschluß im Spannungsnulldurchgang auftritt, zeigt Figur 7d einen Spannungsverlauf mit einem Kurzschluß im Spannungsmaximum. Der nach dem Kurzschluß auftretende Verlauf der Größe $\Delta$ U (t) ist in Figur 7e gezeigt. Es handelt sich um den gleichgerichteten Wert der Spannungsperiode vor dem Kurzschluß. Das Integral des gleichgerichteten Werts, die Größe DELTA, in Abhängigkeit von der Zeit ist in Figur 7f dargestellt. Wenn DELTA den voreingestellten Wert $\Delta$ U < erreicht, wird eine Voraussetzung für eine Anregung erzeugt.

Wie oben erläutert, werden die Leitererdspannungen und die Leiterleiterspannungen überwacht, um asymmetrische und symmetrische Spannungsänderungen im Netz unterscheiden zu können. Hieraus lassen sich dann unsymmetrische und symmetrische Fehler feststellen. Bei asymmetrischen Spannungsänderungen wird wie folgt vorgegangen:

Unsymmetrische Fehler werden durch eine asymmetrische negative Spannungsänderung unter Berücksichtigung einer Nullsystemanregung erfaßt. Um zwischen Netzfehlern und Fehlern im Spannungswandlersekundärkreis unterscheiden zu können, ist abhängig von der Fehlerart zu prüfen, ob eine Stromänderung in den Leitern der entsprechenden Leiterschleifen (z. B. $I_{L1}$ - $I_{L2}$ bei Fehler $L_1$ - $L_2$) vorliegt.

Abhängig vom Vorzeichen der Stromänderung wird wie folgt verfahren:

a) Negative Stromänderung

Ein Speicher 39 mit den Eigenschaften eines S-R-Flipflops, dessen eine Setzbedingung eine Über- oder Unterspannung U> bzw. U< ist, wird zurückgesetzt, so daß keine Anregung auftreten kann. Die Rücksetzbedingung für den Fall einer negativen Stromänderung ist in Figur 6 mit 40 bezeichnet und bildet mit der Bedingung "kein Überstrom" $\overline{I\!>\!>}$ disjunktiv den Rücksetzwert.

b) Positive Stromänderung

Auf den Verfahrensschritt 38 und den anschließenden Vergleich folgt im Falle einer die Grenzen $\Delta$ U > bzw. $\Delta$ U < über- oder unterschreitenden asymmetrischen Spannungsänderung in einem Schritt 41 eine Prüfung auf eine positive Stromänderung. Ist diese vorhanden, dann wird in einem weiteren Schritt 42 eine Impedanzbestimmung durchgeführt. Wenn die Impedanzbestimmung ergibt, daß die Impedanz innerhalb des unten noch erläuterten "Anregepolygons" liegt, dann ist eine weitere Bedingung für das Setzen des Speichers 33 erfüllt. Zusätzliche Bedingungen sind folgende:

Kein Kurzschlußstrom $\overline{I\!>\!>\!>}$.

Überschreiten eines Mindeststroms I>>.

Liegen alle diese Bedingungen vor, dann wird der Speicher 39 gesetzt, d. h. die Anregung wird gespeichert.

c) Keine Stromänderung

Unter keiner Stromänderung ist hierbei auch eine geringe Stromänderung zu verstehen. Beispielsweise liegt keine Stromänderung vor, wenn das für den jeweiligen Strom ermittelte DELTA, nämlich |DELTA| ≤ 4 % des Nennstroms $I_n$ ist. Dieser Wert ist als Parameter einstellbar. Anschließend wird geprüft, ob der negative Spannungssprung z. B. mehr als 60 % der Leitererdspannung (bei niederohmiger Sternpunkterdung) bzw. mehr als z. B. 30 % $U_n$ der Leiterleiterspannung beträgt. Trifft dies zu, dann liegt ein Fehler im Spannungsmeßkreis vor. Es kann sich dabei um eine Unterbrechung oder einen Kurzschluß handeln.

Die Unterimpedanzanregung ist zu blockieren und die Fehlerart "Meßkreis Spannung gestört" zu melden. Eine automatische Aufhebung der Blockade erfolgt, wenn die Spannung symmetrisch ist und ungefähr der Nennspannung entspricht (U>).

Wenn in der Distanzmessung ebenfalls eine Anregung festgestellt wird, bleibt die Anregung gespeichert bis symmetrische Bedingungen (U>) wieder hergestellt sind oder die Stromüberwachung I>> unterschritten wird.

Wenn eine symmetrische negative Spannungsänderung erfolgt, wird geprüft, ob im gleichen Zeitintervall eine Stromänderung der drei Leiterströme erfolgt ist. Die symmetrische Spannungsänderung wird ebenfalls nach dem in Figur 6 dargestellten Schaltplan festgestellt. Abhängig vom Vorzeichen der Stromänderung wird wie folgt verfahren:

1. Negative Stromänderung

In diesem Falle wird der Speicher für die Anregung zurückgesetzt.

2. Positive Stromänderung

Positive Stromänderungen können durch Lastzuschaltungen oder dreipolige Fehler im Netz hervorgerufen werden.

Um beide Stromänderungsarten voneinander unterscheiden zu können, wird eine Impedanzbestimmung durchgeführt. Wenn die gemessene Impedanz innerhalb des oben erwähnten "Anregepolygons" liegt, erfolgt eine Anregung. Im anderen Fall wird der Speicher für die Anregung durch Rücksetzung gesperrt.

3. Keine Stromänderung

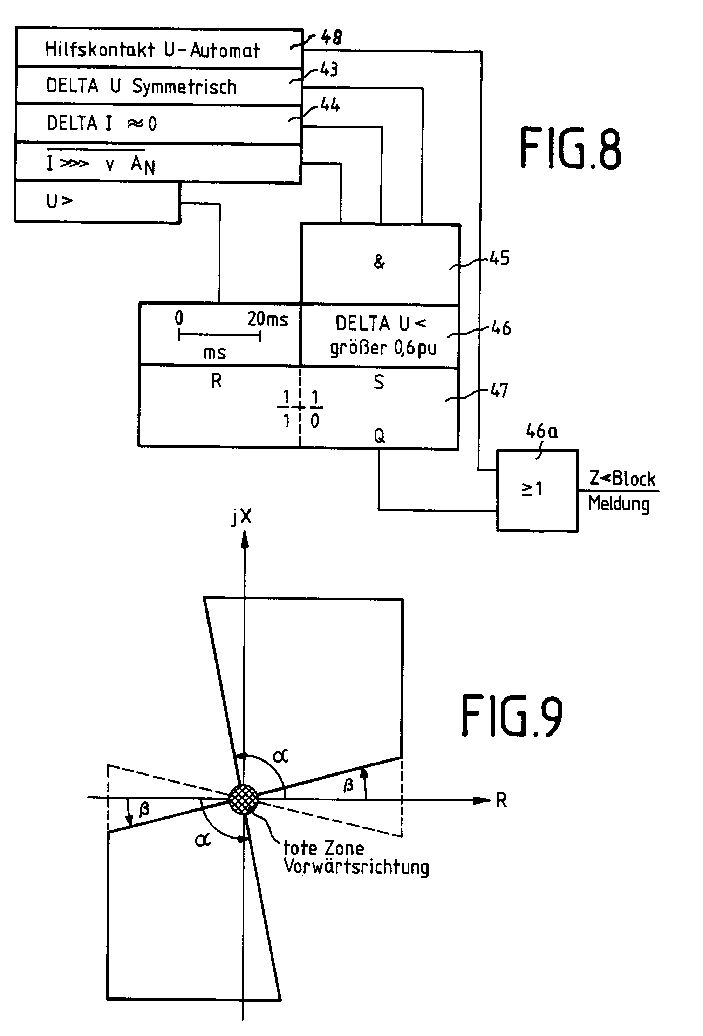

Die Figur 8 zeigt die Vorgänge, die mit diesem Fall verbunden sind. Eine symmetrische Spannungsänderung wird über ein entsprechendes DELTA U festgestellt, eine in Figur 8 mit 43 bezeichnete Bedingung. Die Stromänderung ≈0 wird durch ein DELTA I ermittelt. Diese Bedingung ist in Figur 8 mit 44 bezeichnet. Eine weitere Bedingung ist, daß keine Nullsystemanregung $A_N$ oder keine Überstromanregung vorhanden sind. Diese Bedingungen werden in einem Schritt 45 konjunktiv verknüpft. An diesen Schritt 45 schließt sich ein weiterer Schritt 46 an, in dem geprüft wird, ob der symmetrische negative Spannungssprung 60 % $U_n$ überschreitet. Bei den 60 % handelt es sich um einen wahlweise vorgebbaren Parameter. Es wird dann ein Speicher 47 gesetzt, durch den über eine ODER-Verknüpfung 46a eine Meldung über einen Fehler im Spannungsmeßkreis erzeugt wird. Diese Meldung wird unmittelbar über die ODER-Verknüpfung hervorgerufen, wenn der in Figur 8 mit 48 bezeichnete Hilfskontakt des Spannungswandlerautomaten abgefallen ist. Es ist dabei die Unterimpedanzanregung zu blockieren und die Fehlerart Automatenfall zu melden. Die Blokkade wird automatisch aufgehoben, wenn die Spannung ungefähr der Nennspannung (U>) entspricht. Dieser Fall führt zu einer Zurücksetzung des Speichers 47.

Zur Begrenzung der Reichweite der Anregung und für zusätzliche Plausibilitätskontrollen sind Bedingungen aus Impedanzmessungen vorzusehen. Hierbei werden zwei Funktionen unterschieden:
- eine echte Unterimpedanzanregung,
- eine Distanzmessung als Hilfsfunktion,

Eine Anregung allein durch eine echte Unterimpedanzanregung darf nur erfolgen, wenn
- der Fußpunktstrom I> überschritten ist,
- keine Fehlermeldung Automatenfall vorliegt,
- keine I> > > oder I> >, DELTA U Anregung vorliegt.

Zur Bestimmung von Reaktanz und Resistanz wird eine Leitungsdifferentialgleichung 1. Ordnung verwendet.

**Patentansprüche**

1. Verfahren für die Anregung eines mehrphasigen Distanzschutzes mit digitaler Verarbeitung der gemessenen Ströme und Spannungen, **dadurch gekennzeichnet,** dass die Leitererdspannungen und die Leiterleiterspannungen auf asymmetrische oder symmetrische Änderungen über vorgebbare Grenzen ($U_E$>, $U_E$<, $U_L$>, $U_L$<) hinaus überwacht werden, dass bei überschreitung dieser Grenzen die zu den Leitererdspannungen und den Leiterleiterspannungen gehörenden Ströme auf Stromänderungen geprüft werden, dass bei keinen oder geringen Änderungen der Ströme über einen vorgebbaren Wert hinaus und Änderungen der zugehörigen Leitererdspannung oder Leiterleiterspannungen über die vorgebbaren Grenzen hinaus eine auf den Messkreis bezogene Fehlermeldung erzeugt wird, dass bei negativen Stromänderungen über einen vorgebbaren Wert hinaus und einem Absinken der zugehörigen Leitererdspannung oder Leiterleiterspannungen unter die vorgebbare Grenze keine Fehlermeldung erzeugt wird und dass bei positiven Stromänderungen der zugehörigen Leitererdspannung oder Leiterleiterspannungen über vorgebbare Grenzen hinaus eine Impedanzbestimmung durchgeführt wird, die eine Anregung verursacht, wenn die Impedanz innerhalb eines vorgegebenen Anregepolygons liegt.

2. Verfahren nach Anspruch 1,
**dadurch gekennzeichnet**,
daß die Amplituden der Leitererdspannungen, der Leiterleiterspannungen und der zugehörigen Ströme durch numerische Mittelwertbildung über ein Datenfenster von einigen Abtastwerten bestimmt werden.

3. Verfahren nach Anspruch 1 oder 2,
**dadurch gekennzeichnet**.
daß die Beträge der aktuellen Abtastwerte von den Beträgen der um eine Periode der Netzfrequenz zurückliegenden Abtastwerte der Leitererdspannungen und der Leiterleiterspannungen sowie der zugehörigen Ströme subtrahiert werden, wobei die Differenzen integriert und mit vorgebbaren Grenzwerten für Spannungen und Ströme verglichen werden.

4. Verfahren nach Anspruch 3,
**dadurch gekennzeichnet,**
dass die Integrale jeweils auf ein Datenfenster von einer halben Periode und auf die Nennspannung oder den Nennstrom bezogen sind.

5. Verfahren nach einem der vorhergehenden Ansprüche,
**dadurch gekennzeichnet**,
daß sowohl bei asymmetrischen als auch bei symmetrischen Änderungen der Leiterleiter- und/oder Leitererdspannungen im Falle einer negativen Stromänderung die Anregung zurückgesetzt wird.

6. Verfahren nach einem der vorhergehenden Ansprüche,
**dadurch gekennzeichnet**,
daß sowohl bei asymmetrischen als auch bei symmetrischen Änderungen der Leiterleiter- und/oder Leitererdspannungen im Falle einer positiven Stromänderung die Impedanzen bestimmt werden und daß bei einer innerhalb des Anregungspolygons liegender Impedanz die Anregung erzeugt wird.

7. Verfahren nach einem der vorhergehenden Ansprüche,
**dadurch gekennzeichnet**,
daß sowohl bei asymmetrischen als auch bei symmetrischen Änderungen der Leiterleiter- und/oder Leitererdspannungen im Falle keiner oder nur einer sehr geringen Stromänderung der jeweilige Spannungssprung mit einem vorgebbaren Wert verglichen wird und daß bei Überschreiten des Werts ein Fehler im Spannungsmeßkreis gemeldet wird.

8. Verfahren nach einem der vorhergehenden Ansprüche,
**dadurch gekennzeichnet**,
daß bei Abfall des Spannungswandlerautomaten ein Fehler im Spannungsmeßkreis gemeldet wird.

9. Verfahren nach einem der vorhergehenden Ansprüche,
**dadurch gekennzeichnet**,
daß die Spannung zwischen Sternpunkt und Erde und der Strom zwischen Sternpunkt und Erde auf Änderungen über vorgebbare Grenzen hinaus überwacht werden, bei deren Überschreiten eine Nullsystemanregung und eine Störungsmeldung über den Meßstromkreis erzeugt wird.

10. Verfahren nach Anspruch 9,
**dadurch gekennzeichnet**,
daß die Änderungen der Spannung und des Stroms durch Subtraktion der Beträge der aktuellen Abtastwerte von den Beträgen der um eine Periode zurückliegenden Abtastwerte durch Integration über eine halbe Periode und Vergleich mit vorgebbaren Schwellenwerten festgestellt werden.

11. Vorrichtung für die Anregung eines mehrphasigen Distanzschutzes mit digitaler Verarbeitung der gemessenen Ströme und Spannungen zur Durchführung des Verfahrens nach einem der vorhergehenden Ansprüche,
**dadurch gekennzeichnet,**
dass die Sekundärseiten von mit Phasenleitern (1, 2, 3) verbundenen Stromwandlern (4, 5, 6) und Spannungswandlern jeweils unmittelbar und über Kontakte eines Spannungswandlerautomaten (10) mit einem Multiplexer (11) einer Datenerfassungseinheit verbunden sind, die über einen Bus (16) an einen Mikrorechner (13) angeschlossen ist, der Mittel zur Erkennung asymmetrischer oder symmetrischer Änderungen der Leitererdspannungen und Leiterleiterspannungen über vorgebbare Grenzen ($U_E>$, $U_E<$, $U_L>$, $U_L<$) hinaus und Mittel zur Erkennung damit verbundener Stromänderungen sowie Mittel aufweist, die bei keinen oder geringen Änderungen der Ströme über einen vorgebbaren Wert hinaus und Änderungen der zugehörigen Leitererdspannung oder Leiterleiterspannungen über die vorgebbaren Grenzen hinaus eine auf den Messkreis bezogene Fehlermeldung und bei negativen Stromänderungen über einen vorgebbaren Wert hinaus und einem Absinken der zugehörigen Leitererdspannung oder Leiterleiterspannungen unter die vorgebbare Grenze keine Fehlermeldung erzeugen und die bei positiven Stromänderungen über einen vorgebbaren Wert hinaus eine Impedanz bestimmen und eine Anregung erzeugen, wenn die Impedanz innerhalb eines vorgegebenen Anregepolygons liegt.

**Claims**

1. Method for the excitation of a multiphase distance protection with digital processing of the measured currents and voltages, characterised thereby, that the conductor-to-earth voltages and the conductor-to-conductor voltages are monitored for asymmetric nor symmetric changes beyond presettable limits (UE?, UE?, UL?, UL?), that the currents belonging the conductor-to-earth voltges and the conductor-conductor voltages are tested for changes in current when these limits are exceeded, that a fault report related to the measurement circuit is generated in the case of no or small changes of the currents beyond a presettable value and changes in the associated conductor-to-earth voltage or conductor-to-conductor voltages beyond the presettable limits, that no fault report is generated in the case of negative current changes beyond a presettable value and a dropping of the associated conductor-to-earth voltage or conductor-to-conductor voltages below the presettable limits and that an impedance determination is performed, which causes an excitation when the impedance lies within a preset excitation polygon, in the case of positive current changes of the associated conductor-to-earth voltage or conductor-to-conductor voltages beyond presettable limits.

2. Method according to claim 1, characterised thereby, that the amplitudes of the conductor-to-earth voltages, the conductor-to-conductor voltages and the associated currents are ascertained by numerical mean value formation of several scanning values by way of a data window.

3. Method according to claim 1 or 2, characterised thereby, that the amounts of the actual scanning values are subtracted from the amounts of those scanning values of the conductor-to-earth voltages and the conductor-to-conductor voltages as well as of the associated currents, which lie behind one period of the mains frequency, wherein the differences are integrated and compared with presettable limit values for voltages and currents.

4. Method according to claim 3, characterised thereby, that the integrals are each referred to a data window of half a period and to the nominal voltage or the nominal current.

5. Method according to one of the preceding claims, characterised thereby, that excitation is reset in the case of a negative current change for asymmetric as well as also for symmetric changes in the conductor-to-conductor voltages and/or the conductor-to-earth voltages.

6. Method according to one of the preceding claims, characterised thereby, that the impedances are determined in the case of a positive current change for asymmetric as well as also for symmetric changes in the conductor-to-conductor voltages and/or the conductor-to-earth voltages and that the excitation is generated when an impedance lies within the preset excitation polygon.

7. Method according to one of the preceding claims, characterised thereby, that the respective voltage step is compared with a presettable value in the case of no or an only very small current change for asymmetric as well as also for symmetric changes in the conductor-to-conductor voltages and/or the conductor-to-earth voltages and that a fault in the voltage-measuring circuit is reported on the value being exceeded.

8. Method according to one of the preceding claims, characterised thereby, that a fault in the voltage-measuring circuit is reported in the case of failure of the automatic voltage transformers.

9. Method according to one of the preceding claims, characterised thereby, that the voltage between star point and earth and the current between star point and earth are monitored for changes beyond presettable limits, on the exceeding of which a zero system excitation and a fault report are generated by way of the measurement current circuit.

10. Method according to claim 9, characterised thereby, that the changes in the voltage and in the current are ascertained by subtraction of the amounts of the actual scanning values from the amounts of these scanning values, which lie behind by one period, by integration over half a period and comparison with presettable threshold values.

11. Device for the excitation of a multiphase distance protection with digital processing of the measured currents and voltages for the performance of the method according to one of the preceding claims, characterised thereby, that the secondary sides of current transformers (4, 5, 6) and voltage transformers connected with phase conductors (1, 2, 3) are respectively connected directly and by way of contacts of an automatic voltage transformer (10) with a multiplexer (11) of a data acquisition unit which is connected by way of a bus (16) with a microcomputer (13), which displays means for the recognition of asymmetric or symmetric changes beyond presettable limits (UE>, UE<, UL>, UL<) in the conductor-to-earth voltages and the conductor-to-conductor voltages and means for the recognition of current changes connected therewith as well as means which, in the case of no or small changes of the currents beyond a presettable value and changes in the associated conductor-to-earth voltage or conductor-to-conductor voltages beyond the presettable limits generate a fault report related to the measurement circuit and which, in the case of negative current changes beyond a presettable value and a dropping of the associated conductor-to-earth voltage or conductor-to-conductor voltages below the presettable limits, generate no fault report and which, in the case of positive current changes beyond a presettable value determine an impedance and generate an excitation when the impedance lies within a preset excitation polygon.

**Revendications**

1. Procédé pour exciter un dispositif de protection de distance de lignes polyphasées, avec traitement numérique des intensités et tensions mesurées,
caractérisé en ce
qu'on surveille les éventuelles modifications asymétriques ou symétriques des tensions simples et des tensions composées au-delà de limites consignables (UE>, UE<, UL>, UL<), en ce qu'en cas de dépassement de ces limites, on contrôle les éventuelles modifications des intensités correspondant aux tensions simples et aux tensions composées, en ce qu'en cas de modifications inexistantes ou faibles des intensités au-delà d'une valeur consignable et de modifications de la tension simple ou des tensions composées associées au-delà des limites consignables, on produit une signalisation d'erreur rapportée au circuit de mesure, en ce qu'en cas de modifications négatives d'intensité au-delà d'une valeur consignable et d'un abaissement de la tension simple ou des tensions composées associées en dessous des limites consignables, on ne produit pas de signalisation d'erreur, et en ce qu'en cas de modifications positives d'intensité et de modifications de la tension simple ou des tensions composées associées au-delà de limites consignables, on réalise une détermination d'impédance, qui provoque une excitation si l'impédance se trouve à l'intérieur d'un polygone d'excitation consigné.

2. Procédé selon la revendication 1,
caractérisé en ce
qu'on détermine les amplitudes des tensions simples, des tensions composées et des intensités associées par formation de moyenne numérique sur une fenêtre de données constituée de quelques valeurs de balayage.

3. Procédé selon la revendication 1 ou 2,
caractérisé en ce
qu'on soustrait les montants des valeurs actuelles de balayage des tensions simples et des tensions composées ainsi que des intensités associées, des montants des valeurs de balayage qui leur sont antérieures d'une période de la fréquence de réseau, les différences étant intégrées et comparées à des valeurs limites consignables de tensions et d'intensités.

4. Procédé selon la revendication 3,
caractérisé en ce
que les intégrales sont chaque fois rapportées à une fenêtre de données constituée d'une demi-période, et à la tension nominale ou l'intensité nominale.

5. Procédé selon l'une des revendications précédentes,
caractérisé en ce
qu'en cas de modifications tant asymétriques que symétriques des tensions simples et/ou composées, on applique de nouveau l'excitation si la modification d'intensité est négative.

6. Procédé selon l'une des revendications précédentes,
caractérisé en ce
qu'en cas de modifications tant asymétriques que symétriques des tensions simples et/ou composées, on détermine les impédances si la modification d'intensité est positive, et en ce qu'on produit l'excitation si l'impédance se trouve à l'intérieur du polygone d'excitation.

7. Procédé selon l'une des revendications précédentes,
caractérisé en ce
qu'en cas de modifications tant asymétriques que symétriques des tensions simples et/ou composées, si la modification d'intensité est inexistante ou seulement très faible, on compare l'écart de tension respectif à une valeur consignable, et en ce qu'on signale une erreur dans le circuit de mesure de tension si cette valeur est dépassée.

8. Procédé selon l'une des revendications précédentes,
caractérisé en ce
qu'on signale une erreur dans le circuit de mesure de tension en cas de panne de l'automate de transformation de tension.

9. Procédé selon l'une des revendications précédentes,
caractérisé en ce
qu'on surveille les éventuelles modifications au-delà de limites consignables de la tension et de l'intensité entre le neutre et la terre, et on produit une excitation du système homopolaire et une signalisation de défaillance par l'intermédiaire du circuit de courant de mesure si ces limites sont dépassées.

10. Procédé selon la revendication 9,
caractérisé en ce
qu'on détermine les modifications de la tension et de l'intensité par soustraction des montants des valeurs actuelles de balayage des montants des valeurs de balayage qui leur sont antérieures d'une période, par intégration sur une demi-période et par comparaison avec des valeurs de seuil consignables.

11. Dispositif pour exciter un dispositif de protection de distance de lignes polyphasées avec traitement numérique des intensités et tensions mesurées, pour la mise en oeuvre du procédé selon l'une des revendications précédentes,
caractérisé en ce
que les côtés secondaires de transformateurs d'intensité (4,5,6) et de transformateurs de tension reliés aux lignes de phase (1,2,3) sont reliés, respectivement directement et par l'intermédiaire de contacts d'un automate de transformation de tension (10), à un multiplexeur (11) d'une unité collectrice de données reliée par un bus (16) à un micro-ordinateur (13), qui présente des moyens pour identifier des modifications asymétriques ou symétriques des tensions simples et des tensions composées au-delà de limites consignables (UE>, UE<, UL>, UL<) et des moyens pour identifier des modifications connexes d'intensité, ainsi que des moyens qui produisent une signalisation d'erreur rapportée au circuit de mesure en cas de modifications inexistantes ou faibles des intensités au-delà d'une valeur consignable et de modifications de la tension simple ou des tensions composées associées au-delà des limites consignables, et ne produisent pas de signalisation d'erreur en cas de modifications négatives d'intensité au-delà d'une valeur consignable et d'un abaissement de la tension simple ou des tensions composées associées en dessous des limites consignables, et qui, en cas de modifications positives d'intensité au-delà d'une valeur consignable, déterminent une impédance et produisent une excitation si l'impédance se trouve à l'intérieur d'un polygone d'excitation consigné.

# FIG.1

# FIG.2

# FIG.3

```
21
┌──────────────────────────────┬──────────────────────────┐
│                        ┌──────┤                          │
│  Überstrom-            │  Z   │                          │
│  anregung             └──────┤                          │
├──────────────────────────────┤                          │
22                      ┌──────┤                          │
│                        │  Z   │         ≥1                ├── Anregung
│  Meßgrößen-           └──────┤                          │
│  änderung                     │                          │
├──────────────────────────────┤                          │
│  "Echte"          ┌─────┤                          │
│  Unterimpedanz-   │  A4 │                          │
│  anregung          └─────┤                          │
└──────────────────────────────┴──────────────────────────┘
       24                              25
```

# FIG.4

```
                                              26
┌─────────────────────────────────┐      ┌──────────────┐
│  ┌──────────┐                    │      │  Impedanz-   │
│  │  I ⋙    │                    ├──────┤  messung     │
│  └──────────┘                    │      └──────────────┘
│       19                         │
│              Z' < Z an           │
│         ┌──────────┐             │
│         │    &     ├── A ( I ⋙ )│
│         └──────────┘             │
│              27                  │
└─────────────────────────────────┘
```

# FIG.5

# FIG.6

FIG.7a

FIG.7b

FIG.7c

FIG.7d

FIG.7e

FIG.7f

**FIG.8**

| | | |
|---|---|---|
| Hilfskontakt U-Automat | | 48 |
| DELTA U Symmetrisch | | 43 |
| DELTA I $\approx 0$ | | 44 |
| $\overline{I \ggg \lor A_N}$ | | |
| U > | | |

& — 45

| 0        20ms | DELTA U < | 46 |
| ms | größer 0,6pu | |
| R | S | 47 |
| $\frac{1}{1}$ ⎮ $\frac{1}{0}$ | Q | |

46a

≥1 — Z<Block Meldung

**FIG.9**

jX

α

β

R

β

α

tote Zone
Vorwärtsrichtung